# EUROPEAN PATENT APPLICATION

(11) **EP 4 521 367 A1**
(43) Date of publication of application: **12.03.2025**
(21) Application number: 23195785.3
(22) Date of filing: 06.09.2023
(51) Int. Cl.: G06V 40/10

(54) **A METHOD FOR FORMING A MACHINE LEARNING MODEL**

(71) Applicant: Mölnlycke Health Care AB, 431 21 Mölndal (SE)
(72) Inventor: KWON, Jhung-Ha, POTTERS BAR (GB); DZIAK, Katherine L, ALPHARETTA (US); MORRIS, Kevin, ATWORTH (GB)
(74) Representative: Kransell & Wennborg KB

(57) **Abstract**

The present disclosure generally relates to a computer-based machine learning and computer vision. Specifically, the present disclosure pertains to a method for forming a machine learning model designed to classify human hands based on acquired images and identified features. The present disclosure also relates to a corresponding computer system and computer program product.

## Description

### TECHNICAL FIELD

The present disclosure generally relates to a computer-based machine learning and computer vision. Specifically, the present disclosure pertains to a method for forming a machine learning model designed to classify human hands based on acquired images and identified features. The present disclosure also relates to a corresponding computer system and computer program product.

### BACKGROUND

In various industries and applications, accurate and efficient classification of human hands within images has become a critical task. From gesture recognition systems in human-computer interaction to medical diagnostics and biometric authentication, the capability to discern and classify complex structures and configurations of human hands has far-reaching implications.

Conventional approaches to classifying human hands often rely on the manual determination of hand features, using, for example, a tape measure. This process is not only time-consuming but also susceptible to human error, especially when dealing with the intricate and nuanced features of human hands. Furthermore, these manual feature extraction methods often struggle to adapt to inherent variations across individuals' hands and may not generalize well to diverse datasets.

Efforts to improve upon the manual and imprecise nature of tape measures have led to the development of electronic and digital technologies, such as pressure sensors, optical sensors, and other devices. An example of such an apparatus is the use of various three-dimensional (3D) scanning arrangements positioned in the physical store and operated to generate data used by human experts as part of the human experts' product recommendation process. There are also embodiments of 3D scanning systems that utilize various software systems to replace the human expert.

However, the trend is moving away from physical stores towards online purchasing. One issue with online purchasing is that end-users often lack confidence in the items being purchased. This concern is particularly relevant for specialized gloves where a precise fit is crucial. Additionally, due to variations in sizes offered by different manufacturers, end-users can never be certain that the purchased item will fit as expected. Recent advancements in machine learning and computer vision have enabled the development of automated techniques for feature extraction and classification. Deep learning models, in particular, have shown exceptional capabilities in discerning intricate patterns within images, including those of human hands. However, these models usually require large amounts of annotated data for training, and their performance is highly dependent on the quality and diversity of the training dataset.

These challenges have critical implications, particularly as the retail industry increasingly shifts toward online platforms. Consumers must rely on such measurements to make informed purchasing decisions for specialized items like gloves. Existing solutions, even those utilizing three-dimensional scanning technologies or rudimentary machine learning techniques, often lack adequate reliability, adaptability, and scalability.

Taking the above into account, there seems to be room for further improvements in relation to improve the methodology for assisting users in selecting the best-fitting gloves, leveraging advancements in machine learning and computer vision.

### SUMMARY

In view of above-mentioned and other drawbacks of the prior art, it is an object of the present disclosure to provide improvements in relation to efficient formation of a machine learning model designed to classify human hands based on acquired images and identified features.

According to an aspect of the present disclosure, it is therefore provided a method adapted to form a machine learning model for determining measurements of a human hand, wherein the method comprises the steps of acquiring, by a processing unit, an image of the human hand, identifying, using the processing unit, a plurality of features within the acquired image of the human hand, wherein the plurality of features are selected according to a predefined scheme defining a corresponding plurality of specific positions at the human hand, and training, using the processing unit, the machine learning model on the basis of the plurality of identified features, wherein the training is performed for a plurality of different human hands.

The present disclosure improves the classification of a human hand, by using a machine learning model that has been trained on images of different human hands, where each image comprises hand features that are identified at a plurality of predefined positions at the human hand. Consequently, the training data derived from these images are treated consistently, enhancing the machine learning model's performance with each new hand image.

The training of the machine learning model on a diverse dataset ensures adaptability to various hand shapes, sizes, and characteristics. This adaptability is essential for accommodating natural diversity among human hands.

Advantages of the present disclosure include reducing or eliminating human error in hand classification and creating a highly time-efficient, automated process. Training the machine learning model on a large dataset of varied human hands allows it to adapt to anatomical variations across a broad spectrum of hands.

The presented disclosure further enables precise and accurate measurement determination of human hand measurements. This accuracy is essential for applications that rely on precise hand measurements and/or dimensions, such as designing tailored gloves or for selecting a best matching glove. The ability to accurately measure and predict hand dimensions contributes to personalized recommendations and products. Applications like glove size estimation and customized medical devices benefit from this personalization, enhancing user comfort and satisfaction.

In one embodiment, the plurality of specific positions at the human hand includes, but are not limited to, at least a first and a second position located at ends of a palmar crease of the human hand. The inventors have identified that a particular focus on palmar creases offers greater granularity in the measurement of the human hand, allowing for further improvements and reproducibility when training the machine learning model based on a plurality of different human hands. Additionally, the palmar creases are readily present within a majority of all human hands and are as such generally advantageous to identify using known computer vision techniques.

In some embodiments the plurality of specific positions at the human hand includes a total of 15 different positions. The incorporation of a high number of specific positions serves to capture a more complete representation of the human hand, thus enhancing the machine learning model's training, as well as its resultant accuracy and reliability. It is of course possible, and within the scope of the present disclosure, to use more than or less than 15 different positions at the human hand.

Advantageously, wherein the plurality of features are identified by the processing unit by applying computer vision techniques to the acquired image of the human hand. The application of computer vision techniques advantageously ensures the automation and objectivity of the feature identification process, thereby eliminating human error commonly found in manual approaches.

In one embodiment the computer vision techniques are selected from a group comprising edge detection, feature extraction, semantic segmentation, and pattern recognition. Each of these techniques has its own merits in the feature identification process and can be leveraged depending on the specific requirements, thus contributing to the adaptivity of the scheme according to the present disclosure.

Preferably, the method according to the present disclosure further comprises the step of providing measurements of portions of the human hand. This is a desirable but not a necessary step, especially in application scenarios where such measurements are to be used for e.g. glove selection or recommendation, where an end user requires explicit measurements to make an informed purchasing decision.

Advantageously, the step of training the machine learning model is performed by the processing unit using machine learning algorithms, thereby departing from rudimentary statistical models, thus significantly augmenting the method's ability to make highly accurate hand measurements. Furthermore, the machine learning algorithms applies deep learning methodology. Deep learning methodologies are applied to allow the system to understand complex patterns and improve its performance over time.

When developing a machine learning model as defined above, it is furthermore possible to allow the machine learning model to become reliable and adaptable enough for online retail scenarios as well as for medical applications, where user trust is crucial. The machine learning model may also be useful in relation to a range of platforms, from specialized scanning equipment to everyday handheld electronic devices.

Furthermore, in an embodiment there is provided a computer implemented method for processing an image of a human hand, wherein the method comprises the steps of acquiring, by a processing circuitry, an image of the human hand, identifying, using the processing unit, a plurality of features within the acquired image of the human hand, wherein the plurality of features are selected according to a predefined scheme defining a corresponding plurality of specific positions at the human hand, and applying, using the processing circuitry, the machine learning model as defined above to the identified plurality of features to determine at least one of a width and a length of a selected portion of the human hand. Within the context of the present disclosure the expression at least one of a width and a length of a selected portion of the human hand is to be understood to mean only a width, only a length, or both a width and a length of the selected portion of the human hand. Furthermore, the selected portion of the human hand may for example be a finger, a wrist, or any other portion of the human hand.

Specifically, the machine learning model may be used for estimating, using the processing circuitry, a glove size for the human hand based on the determined at least one of the width and the length of the selected portion of the human hand. Automating the measurement process and following recommendation of glove reduces the need for manual labor, which can lead to cost. It also mitigates potential errors that could lead to costly mistakes.

It may furthermore, in line with the present disclosure, be possible to allow the determined at least one of the width and the length of the selected portion of the human hand are stored in a database together with an identifier for a user. The user may thereby, at a later stage, be presented with further suggestions as to e.g. new styles of gloves, possible in other designs and materials.

According to another aspect of the present disclosure, there is provided a computer system adapted to form a machine learning model for determining measurements of a human hand, wherein the computer system comprises a processing unit adapted to acquire an image of the human hand, identify a plurality of features within the acquired image of the human hand, wherein the plurality of features are selected according to a predefined scheme defining a corresponding plurality of specific positions at the human hand, and train the machine learning model on the basis of the plurality of identified features, wherein the training is performed for a plurality of different human hands. This aspect of the present disclosure provides similar advantages as discussed above in relation to the previous aspects of the present disclosure.

Preferably, a data capturing arrangement is used for capturing the image(s) of the human hand. Such a data capturing arrangement comprises at least one of a time-of-flight (TOF) sensor and/or an image sensor adapted to acquire the image of the human hand. The TOF sensor may include a LIDAR sensor to be used in distance determination. One or a plurality of image sensors to be used in capturing an image of the hand and for identifying the plurality of hand features. It may also be possible and within the scope of the present disclosure to make use of other sensor types, including for example a radar, a laser scanner, an inertial measurement unit, a structured light projector, a stereoscopic imaging arrangement, a heat sensor, etc. Other sensors systems, present and future, are of course possible and within the scope of the present disclosure. It may of course be possible to combine more than one sensor with the data capturing arrangement, such as for example an image capturing device and a LIDAR arrangement. In a preferred embodiment the data capturing arrangement comprises both a LIDAR sensor and an image sensor, where the LIDAR sensor is arranged to capture the first set of data and the image sensor is arranged to capture the second set of data.

In a preferred embodiment, the computer system is a handheld electronic device, such as for example a mobile phone or a tablet. The methodology according to the present disclosure may at least partly be provided in the form of an "App" being executed by the mobile phone. The handheld electronic device may in some embodiments be connected to the Internet, allowing the handheld electronic device to be provided with assistance in determining hand measurements, such as by allowing some portions of the present scheme to be executed remotely at e.g. a server. The server may also in some embodiments hold information relating to different gloves and their corresponding measurements.

For instructing the end user when performing the hand measurements, it may be advantageous to provide the computer system (e.g. the handheld electronic device) with a display screen. The display screen may also be used for guiding the end user, using e.g. AR as discussed above.

According to a further aspect of the present disclosure, there is provided a computer program product comprising a non-transitory computer readable medium having stored thereon computer program means for operating a computer system adapted to form a machine learning model for determining measurements of a human hand, the computer system comprising a processing unit, wherein the computer program product comprises code for acquiring, by a processing unit, an image of the human hand, code for identifying, using the processing unit, a plurality of features within the acquired image of the human hand, wherein the plurality of features are selected according to a predefined scheme defining a corresponding plurality of specific positions at the human hand, and code for training, using the processing unit, the machine learning model on the basis of the plurality of identified features, wherein the training is performed for a plurality of different human hands. Also this aspect of the present disclosure provides similar advantages as discussed above in relation to the previous aspects of the present disclosure.

A software executed by the processing unit for operation in accordance to the present disclosure may be stored on a computer readable medium, being any type of memory device, including one of a removable non-volatile random access memory, a hard disk drive, a floppy disk, a CD-ROM, a DVD-ROM, a USB memory, an SD memory card, a solid state drive, other non-volatile flash based storage media, or a similar computer readable medium known in the art.

Further features of, and advantages with, the present disclosure will become apparent when studying the appended claims and the following description. The skilled addressee realizes that different features of the present disclosure may be combined to create embodiments other than those described in the following, without departing from the scope of the present disclosure.

### BRIEF DESCRIPTION OF THE DRAWINGS

The various aspects of the present disclosure, including its particular features and advantages, will be readily understood from the following detailed description and the accompanying drawings, in which:
Fig. 1 conceptually illustrates a computer system according to a currently preferred embodiment of the present disclosure,
Fig. 2 presents exemplary features of a human hand,
Fig. 3 schematically illustrates a possible implementation of a machine learning based object processing scheme used in conjunction with the present disclosure, and
Figs. 4A and 4B are flow charts illustrating the steps of performing the method according to a currently preferred embodiment of the present disclosure.

### DETAILED DESCRIPTION

The present disclosure will now be described more fully hereinafter with reference to the accompanying drawings, in which currently preferred embodiments of the present disclosure are shown. The present disclosure may, however, be embodied in many different forms and should not be construed as limited to the embodiments set forth herein; rather, these embodiments are provided for thoroughness and completeness, and fully convey the scope of the present disclosure to the skilled person. Like reference characters refer to like elements throughout.

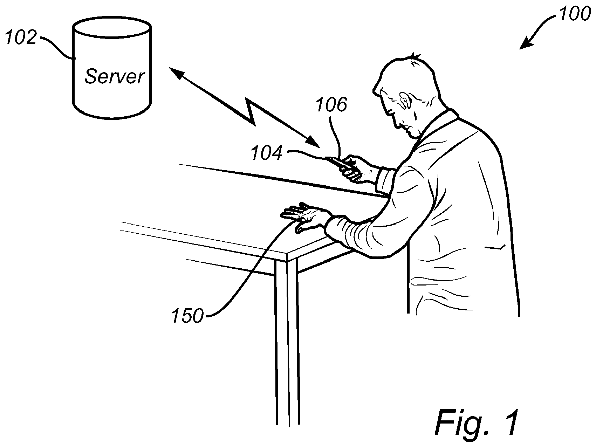

Turning now to the drawings and to Fig 1 in particular, there is conceptually illustrated a computer system 100 adapted to form a machine learning model for determining measurements of a human hand 150. The computer system 100 comprises at least a data capturing arrangement comprising a processing unit. In Fig. 1 the data capturing arrangement is illustrated as comprising a server and related database 102, where the mentioned processing unit is provided as a component of the server 102 (not explicitly presented in Fig. 1). The server 102 could be a dedicated physical server or a cloud server.

The computer system 100 further comprises an object capturing device 104. In Fig. 1 the object capturing device 104 is provided as a component of a mobile phone 106. The mobile phone may further comprise a display screen.

The computer system 100 is in Fig. 1 illustrated as a "client-server" implementation where the mobile phone 106 is operated by an end user and the server 102 is arranged remotely from the end user (not even necessarily within the same country as the user). Typically, the server 102 may be used for offloading computational heavy processing from the mobile phone 106.

The server 102 and the mobile phone 106 are preferably connected with each other using a network connection, such as provided by means of an Internet connection. Any form of wired or wireless network protocol is possible and within the scope of the present disclosure. It should be understood that other types of remote processing implementations are possible, for example including a so-called "serverless setup".

It should be noted that the scheme according to the present disclosure could be implemented solely using the mobile phone 106, i.e. without the need for the server 102.

The above-mentioned data capturing device 104 may in turn comprise one or a plurality of sensors for collecting information relating to the hand of the user. Such sensors may for example include an image sensor (i.e. a camera), a LIDAR arrangement, a radar arrangement, a laser scanner, inertial measurement unit, structured light projector, stereoscopic imaging arrangement or a heat sensor, etc. Further sensors are of course possible and within the scope of the present disclosure.

For reference, the processing unit may for example be manifested as a general-purpose processor, a graphics processing unit, an application specific processor, a circuit containing processing components, a group of distributed processing components, a group of distributed computers configured for processing, a field programmable gate array (FPGA), etc. The processor may be or include any number of hardware components for conducting data, signal and/or image processing or for executing computer code stored in memory. It may also be possible and within the scope to make use of system-on-chip (SOC) implementations. The memory may be one or more devices for storing data and/or computer code for completing or facilitating the various methods described in the present description. The memory may include volatile memory or non-volatile memory. The memory may include database components, object code components, script components, or any other type of information structure for supporting the various activities of the present description. According to an exemplary embodiment, any distributed or local memory device may be utilized with the systems and methods of this description. According to an exemplary embodiment the memory is communicably connected to the processor (e.g., via a circuit or any other wired, wireless, or network connection) and includes computer code for executing one or more processes described herein.

As presented above, the present disclosure may in some embodiments make use of the computer system for forming a machine learning model, where the machine learning model in turn and at a later stage may be used for determining measurements of one or a plurality of portions of a human hand. The determined measurements may subsequently be used for selecting a suitable glove to match the human hand that is currently processed.

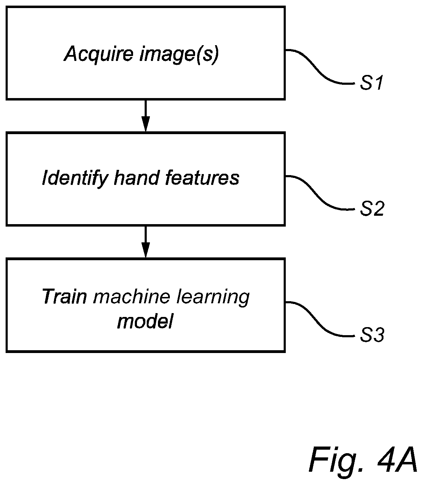

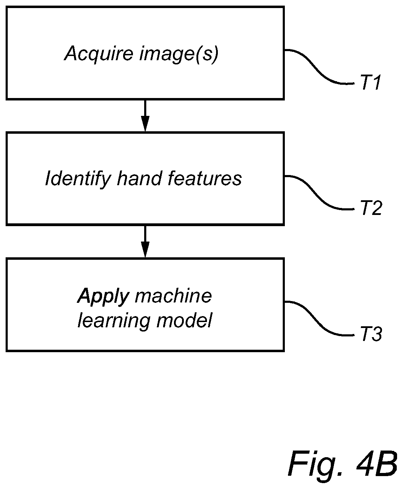

Accordingly, and with further reference to Fig. 4A and 4B, the computer system 100 is, during operation adapted to perform a plurality of steps for a) training the machine learning model, and b) to use the machine learning model for determining hand measurements.

The steps performed by the computer system 100 for training the machine learning model comprises first to acquire, S1, an image of the human hand. The image may for example be captured using the above indicated mobile phone 106. However, it may as an alternative be possible to provide the server 102 with a plurality of images, for example to be stored with the related database, where each of the images will be handled by the server 102 in accordance to the present training scheme.

The image of the hand is preferably arranged to comprise all of the human hand, at least from the top of the fingers and down to the wrist, past the wrist or even further down the forearm. Preferably, the images are captured under various lighting conditions, angles, and settings to ensure a broad representation. To ensure that the machine learning model is trained in a swift and smooth manner, it is preferred to provide the server 102 with high quality images of the human hand. As such, it may at least from a training perspective be desirable that each of the images used in the training process are captured when the human hand is arranged flat on a surface, and where the object capturing device 104 is arranged parallel to the surface and at approximately 20 - 50 cm from the surface, preferably around 30 cm from the surface. The surface should preferably free from clutter to ensure that high quality images of the hand may be captured.

Once the image of the hand has been acquired, the server moves on to identify, S2, a plurality of features within the acquired image of the human hand. In accordance to the present disclosure, the plurality of features are selected according to a predefined scheme defining a corresponding plurality of specific positions at the human hand 150.

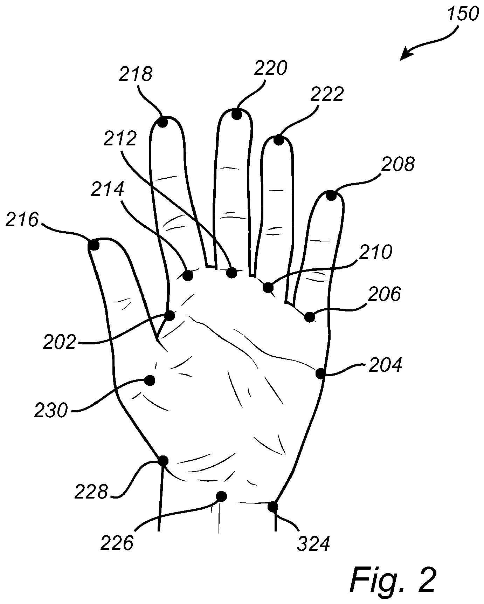

Fig. 2 presents an exemplary illustration of the preferred location of hand features that are used in accordance to the present disclosure. These features could be anatomical landmarks like creases, edges, fingertips, or any other points of interest. The illustration in Fig. 2 presents a total of 15 features and their location, denoted with 202, 204, 206, 208, 210, 212, 214, 216, 218, 220, 222, 224, 226, 228 and 230. Two of these features should be specifically highlighted, namely the hand feature 202 and the hand feature 204, being arranged at opposite side ends of the hand 150. The two hand features 202 and 204 have been identified as being relatively easy to identify.

For training purposes, it is desirable to annotate a set of images of different hands with at least some of the above defined hand features and their location. This manual annotation of the images will assist the server 102 in the initial steps of forming the machine learning model. However, once the machine learning model has reached some form of maturity, the machine learning model may automatically identify the hand features according to the predefined scheme defining the plurality of specific positions at the human hand 150.

The manual annotation may in some embodiments include defining distances between each of the different hand features, such as in millimeters. It should be noted, however, that the mature machine learning model could make use of internal relations between the hand features for estimating and categorizing hand sizes. Therefore, while physical distances between the hand features may be desirable, they are not always necessary. The training scheme according to the present disclosure may be equally applicable to both of these implementations. It should further be stressed that any features with a distance there between may be used in accordance to the scheme in line with present disclosure.

It should also be understood that different means may be applied by the server 102 for identifying the hand features, including for example computer vision techniques selected from a group comprising edge detection, feature extraction, semantic segmentation, and pattern recognition.

Once the hand features have been identified, the machine learning model is trained, S3.

It should be mentioned, the step of training of the machine learning model may in some embodiments be preceded by pre-processing of the images and the identified features. Such pre-processing may for example include image normalization, where pixel intensity values are scaled to e.g. a range of 0 - 1 instead of the typical 0 - 255. The pre-processing may also include data augmentation, involving techniques such as rotation, flipping, and zooming for artificially expanding the dataset. Additionally, the annotations as mentioned above are generally transformed to suit the dimensions and scales of their respective preprocessed images.

When forming a machine learning model, it is also desirable to select a suitable model to be used in the process. For the task of analyzing hand images and their associated features, Convolutional Neural Networks (CNNs) are highly effective and may be used in relation to the scheme according to the present disclosure.

The architecture of the CNN consists of a combination of different types of layers:
An input layer, which receives the preprocessed images.

A plurality of convolutional layers, arranged to automatically learn spatial hierarchies of features.

A plurality of activation layers, where non-linear activation functions like ReLU (Rectified Linear Unit) may be used.

A plurality of pooling layers provided for reducing the dimensions of the data.

A plurality of fully connected layers arranged to make predictions based on the features learned.

An output layer which is adapted to produce the final output, which can be the coordinates of the annotated features or distances between them.

Before training begins, the neural network's weights and biases are initialized with small random numbers. An input image is then passed through each layer of the neural network during the forward pass, applying certain transformations governed by internal parameters (weights and biases). The output is compared to ground truth annotations using a loss function, commonly the Mean Squared Error (MSE) for regression tasks. Subsequently, the backward pass computes the gradient of the loss function with respect to each weight and bias, measuring how much each parameter contributes to the error. Optimization algorithms like stochastic gradient descent (SGD) update the model's weights and biases using these computed gradients. This process is repeated multiple times until the model's performance meets a predefined criterion.

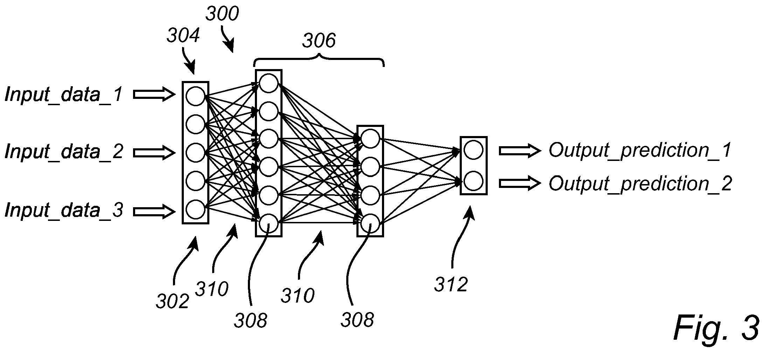

An exemplary deep neural network 300, provided in relation to the machine learning model according to the present disclosure is exemplified in Fig. 3.

The block diagram comprises an input layer 302, configured to receive input data to the deep neural network. The input data includes mathematical representations of the human hand as well as the hand features/annotations provided in relation to each image and specific hand. The input layer includes nodes 304 associated with each of the input layer 302.

The deep neural network 300 may also include one or more convolutional layers, as shown in block 306. Deep neural networks based on recurrent layers take current data from the input layer 302, as well as previously processed data, as input. In other words, recurrent layers are advantageous for capturing the history of the input data.

Nodes 304 of the input layer 302 communicate with nodes 308 of layers 306 via connections 310. The connections 310 and weights are determined during the training of the machine learning model.

The identified features of the human hand and their mutual relation are in the form of mathematical representations provided as an output at output layer 312. It should be noted that the number of connections and nodes for each layer may vary, and Fig. 3 is only provided as an example. Accordingly, in some deep neural network designs more than the indicated layers in Fig. 3 may be used.

In an exemplary embodiment of the present disclosure the machine learning based object processing scheme applies a convolutional neural network for at least portions of the object identification. In a convolutional neural network, as is known per se to the skilled person, convolutions of the input layer are used to compute the output. Local connections are formed such that each part of the input layer is connected to a node in the output. Each layer applies filters whereby the parameters of the filters are learned during training phases for the neural network.

Turning now to Fig. 4B, as indicated above the machine learning model is preferably, once trained, used for determining hand measurements. In an exemplary implementation, the mobile phone 106 may be provided with an application ("App") that is arranged for determining a size of a hand and for presenting suitable gloves that match the determined hand size.

Such an implementation may for example be implemented by presenting instructions within a graphical user interface (GUI) presented within the display screen of the mobile phone 106. The process starts by using the object capturing device 104 of the mobile phone 106 to acquire, T1, an image of the human hand to be measure.

In such an embodiment, it may be possible to further adapt the mobile phone 106 to identify, possible in conjunction with the server 102, the above discussed plurality of features, identified, T2, at the specific predefined locations of the hand.

The information collected and extracted by the mobile phone may subsequently be provided as an input to the above discussed and now trained machine learning model. Accordingly, the now trained machine learning model will be applied, T3, to determine at least one of a width and a length of a selected portion of the human hand.

The determined length and/or width may then be used to match the hand with gloves of known measurements. The user could potentially be presented, within the GUI, with a matching score for various gloves. The GUI could possibly also include an option to acquire/purchase/order a glove that is determined to have a suitable matching score relative to the user's hand.

The matching between the determined distances and the available gloves may be based on statistical modelling. This matching process can be performed using either the mobile phone 106 or the server 102.

Furthermore, the control functionality of the present disclosure may be implemented using existing computer processors, or by a special purpose computer processor for an appropriate system, incorporated for this or another purpose, or by a hardwire system. Embodiments within the scope of the present disclosure include program products comprising machine-readable medium for carrying or having machine-executable instructions or data structures stored thereon. Such machine-readable media can be any available media that can be accessed by a general purpose or special purpose computer or other machine with a processor. By way of example, such machine-readable media can comprise RAM, ROM, EPROM, EEPROM, CD-ROM or other optical disk storage, magnetic disk storage or other magnetic storage devices, solid state drives or other non-volatile flash based storage devices, or any other medium which can be used to carry or store desired program code in the form of machine-executable instructions or data structures and which can be accessed by a general purpose or special purpose computer or other machine with a processor. When information is transferred or provided over a network or another communications connection (either hardwired, wireless, or a combination of hardwired or wireless) to a machine, the machine properly views the connection as a machine-readable medium. Thus, any such connection is properly termed a machine-readable medium. Combinations of the above are also included within the scope of machine-readable media. Machine-executable instructions include, for example, instructions and data which cause a general-purpose computer, special purpose computer, or special purpose processing machines to perform a certain function or group of functions.

Although the figures may show a sequence the order of the steps may differ from what is depicted. Also two or more steps may be performed concurrently or with partial concurrence. Such variation will depend on the software and hardware systems chosen and on designer choice. All such variations are within the scope of the disclosure. Likewise, software implementations could be accomplished with standard programming techniques with rule-based logic and other logic to accomplish the various connection steps, processing steps, comparison steps and decision steps. Additionally, even though the present disclosure has been described with reference to specific exemplifying embodiments thereof, many different alterations, modifications and the like will become apparent for those skilled in the art.

In addition, variations to the disclosed embodiments can be understood and effected by the skilled addressee in practicing the claimed present disclosure, from a study of the drawings, the disclosure, and the appended claims. Furthermore, in the claims, the word "comprising" does not exclude other elements or steps, and the indefinite article "a" or "an" does not exclude a plurality.

## Claims

1. A method adapted to form a machine learning model for determining measurements of a human hand, wherein the method comprises the steps of:
- acquiring, by a processing unit, an image of the human hand,
- identifying, using the processing unit, a plurality of features within the acquired image of the human hand, wherein the plurality of features are selected according to a predefined scheme defining a corresponding plurality of specific positions at the human hand, and
- training, using the processing unit, the machine learning model on the basis of the plurality of identified features, wherein the training is performed for a plurality of different human hands.

2. The method according to claim 1, wherein the plurality of specific positions at the human hand includes at least a first and a second position located at ends of a palmar crease of the human hand.

3. The method according to any one of claims 1 and 2, wherein the plurality of specific positions at the human hand includes a total of 15 different positions.

4. The method according to any one of the preceding claims, wherein the plurality of features are identified by the processing unit by applying computer vision techniques to the acquired image of the human hand.

5. The method according to claim 4, wherein the computer vision techniques are selected from a group comprising edge detection, feature extraction, semantic segmentation, and pattern recognition.

6. The method according to any one of the preceding claims, further comprising the step of:
- providing measurements of portions of the human hand.

7. The method according to any one of the preceding claims, wherein the step of training the machine learning model is performed by the processing unit using machine learning algorithms.

8. The method according to claim 7, wherein the machine learning algorithms applies deep learning methodology.

9. A computer implemented method for processing an image of a human hand, wherein the method comprises the steps of:
- acquiring, by a processing circuitry, an image of the human hand,
- identifying, using the processing unit, a plurality of features within the acquired image of the human hand, wherein the plurality of features are selected according to a predefined scheme defining a corresponding plurality of specific positions at the human hand, and
- applying, using the processing circuitry, the machine learning model according to any one of the preceding claims to the identified plurality of features to determine at least one of a width and a length of a selected portion of the human hand.

10. The method according to claim 9, further comprising the step of:
- estimating, using the processing circuitry, a glove size for the human hand based on the determined at least one of the width and the length of the selected portion of the human hand.

11. The method according to any one of claims 9 and 10, wherein the determined at least one of the width and the length of the selected portion of the human hand are stored in a database together with an identifier for a user.

12. A computer system adapted to form a machine learning model for determining measurements of a human hand, wherein the computer system comprises a processing unit adapted to:
- acquire an image of the human hand,
- identify a plurality of features within the acquired image of the human hand, wherein the plurality of features are selected according to a predefined scheme defining a corresponding plurality of specific positions at the human hand, and
- train the machine learning model on the basis of the plurality of identified features, wherein the training is performed for a plurality of different human hands.

13. The computer system according to claim 12, wherein the data capturing arrangement comprises at least one of a time-of-flight (TOF) sensor and an image sensor adapted to acquire the image of the human hand.

14. The computer system according to any one of claims 12 and 13, wherein the computer system is a handheld electronic device, further comprising a display screen.

15. A computer program product comprising a non-transitory computer readable medium having stored thereon computer program means for operating a computer system adapted to form a machine learning model for determining measurements of a human hand, the computer system comprising a processing unit, wherein the computer program product comprises:
- code for acquiring, by a processing unit, an image of the human hand,
- code for identifying, using the processing unit, a plurality of features within the acquired image of the human hand, wherein the plurality of features are selected according to a predefined scheme defining a corresponding plurality of specific positions at the human hand, and
- code for training, using the processing unit, the machine learning model on the basis of the plurality of identified features, wherein the training is performed for a plurality of different human hands.
